# EUROPEAN PATENT APPLICATION

(11) **EP 2 547 115 A1**
(43) Date of publication of application: **16.01.2013**
(21) Application number: 12168413.8
(22) Date of filing: 17.05.2012
(51) Int. Cl.: H04N 21/41, H04N 21/432, H04N 21/482, H04N 21/472

(54) **Information processing apparatus, information processing method and program**

(30) Priority: 13.07.2011 JP 2011154613
(71) Applicant: Sony Corporation, Tokyo 108-0075 (JP)
(72) Inventor: Kodama, Mizuho, Minato-ku, Tokyo 108-0075 (JP); Souraku, Takehisa, Minato-ku, Tokyo 108-0075 (JP); Asazu, Hideki, Minato-ku, Tokyo 108-0075 (JP)
(74) Representative: Haines, Miles John L.S.

(57) **Abstract**

There is provided an information precessing apparatus which includes a storage part storing content data, an input part to which one user operation is input among a plurality of different modes of user operations, and a plurality of processing parts accessing the content data stored in the storage part through respective access paths different from one another to process the content data. One processing part corresponding to the one user operation input to the input part among the plurality of processing parts accesses and processes the content data.

## Description

The present invention relates to an information processing apparatus, an information processing method and a program.

A video recording/reproducing apparatus is known for recording and storing content data such as images and the like in a storage part and reproducing the recorded content data. Recently, the number of pieces of content data stored in the storage part increases with the increase in capacity of a hard disk drive serving as the storage part.

In general, with an increase in the number of pieces of content data, the number of user operations for selecting a desired piece of content data from among a plurality of pieces of content data stored in a storage part also increases. Accordingly, a technique that allows the user to simply search for the desired piece of content data has been proposed (see Japanese Patent Laid-Open No. 2011-23781).

The technique disclosed in above-described Japanese Patent Laid-Open No. 2011-23781, the user searches for and selects the content data only by a predetermined single user operation. However, the number of user operations for selecting some pieces of content data only by the single user operation increase when a lot of pieces of content data are stored. For example, when a lot of pieces of content data are stored in a multilevel hierarchy, the number of user operations increases for selecting the content data stored in a low-level hierarchy.

Accordingly, it would be desirable to provide a method of effectively selecting a desired piece of content data from among a lot of pieces of content data stored in the storage part.

According to an embodiment of the present invention, there is provided an information processing apparatus which include a storage part storing content data, an input part to which one user operation is input among a plurality of different modes of user operations, and a plurality of processing parts accessing the content data stored in the storage part through respective access paths different from one another to process the content data. One processing part corresponding to the one user operation input to the input part among the plurality of processing parts accesses and processes the content data.

According to another embodiment, there is provided an information processing method which includes accepting, with an input part to which a user operation is input, one user operation among a plurality of different modes of user operations, and accessing and processing, with one processing part corresponding to the one user operation that the input part has accepted among a plurality of processing parts accessing and processing content data stored in a storage part through respective access paths different from one another, the content data.

According to still another embodiment, there is provided a program which causes a computer to execute accepting, with an input part to which a user operation is input, one user operation among a plurality of different modes of user operations, and accessing and processing, with one processing part corresponding to the one user operation that the input part has accepted among a plurality of processing parts accessing and processing content data stored in a storage part through respective access paths different from one another, the content data.

Since one processing part corresponding to one user operation accepted by the input part can be used to access and process the content data, the content data can be removed through one access path among access paths different from one another with respect to each piece of content data. Accordingly, the user can effectively select a desired piece of the content data by selecting the processing part of the less number of processings for selection depending on the content data.

Accordingly, desired content data can be effectively selected from a plurality of pieces of content data stored in a storage part.

### BRIEF DESCRIPTION OF THE DRAWINGS

FIG. 1 is a diagram illustrating a configuration of a recording/reproducing system according to a first embodiment;
FIG. 2 is a block diagram illustrating a hardware configuration of a recording/reproducing apparatus;
FIG. 3 is a diagram explanatory of a reproducing method of content data according to the first embodiment;
FIG. 4 is a functional bock diagram illustrating a configuration of the recording/reproducing apparatus;
FIG. 5 is a flowchart illustrating an operation of the recording/reproducing apparatus according to the first embodiment;
FIG. 6 is a flowchart illustrating a reproduction method from a content list of recorded applications;
FIG. 7 is a flowchart illustrating a reproduction method from a list displayed by a direct key of a remote controller;
FIG. 8 is a flowchart illustrating a method of searching for content by a keyword and reproducing the content;
FIG. 9 is a flowchart illustrating a reproduction method from a mobile terminal;
FIG. 10 is a diagram illustrating a configuration of a recording/reproducing system according to a second embodiment;
FIG. 11 is a flowchart illustrating an operation of a recording/reproducing apparatus according to the second embodiment;
FIG. 12 is a diagram illustrating a configuration of a recording/reproducing apparatus according to a third embodiment;
FiG. 13 is a diagram illustrating a screen of a content list according to the third embodiment; and
FIG. 14 is a diagram illustrating a search result screen by keyword search according to a fourth embodiment.

### DETAILED DESCRIPTION

Hereinafter, embodiments of the invention will be described in detail with reference to the appended drawings. Note that, in this specification and the appended drawings, structural elements that have substantial the same function and structure are denoted with the same reference numerals, and repeated explanation of these structural elements is omitted.

The embodiments will be described in the following order.
1. First Embodiment
   1-1. Recording/reproducing System Outline
   1-2. Recording/reproducing Apparatus Hardware Configuration
   1-3. Content Data Reproduction Method
   1-4. Recording/reproducing Apparatus Functional Configuration
   1-5. Recording/reproducing Apparatus Operation
2. Second Embodiment
3. Third Embodiment
4. Fourth Embodiment
5. Contusion

### < 1. First Embodiment >

### (1-1. Recording/reproducing System Outline)

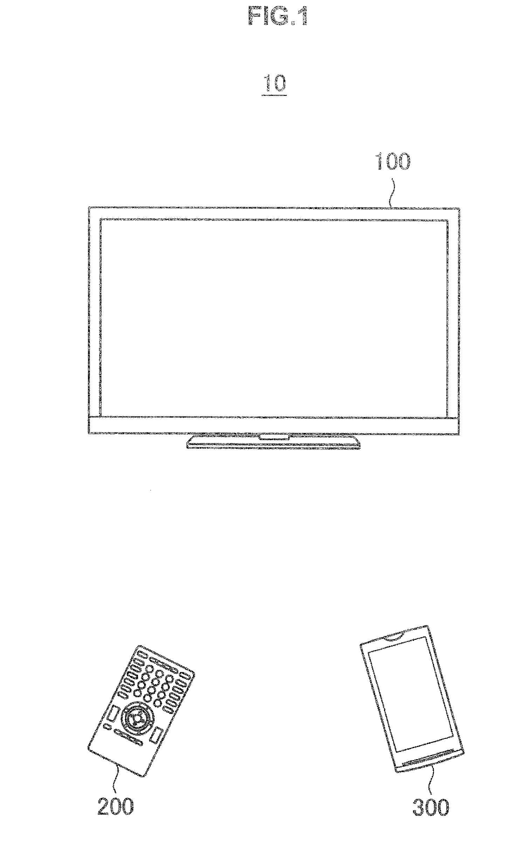

An outline of a recording/reproducing system 10 for content according to a first embodiment will be described with reference to FIG. 1. FIG. 1 is a diagram illustrating a configuration of the recording/reproducing system according to the first embodiment.

The recording/reproducing system 10 is the system recording content such as images and the like and reproducing the content. As illustrated in FIG. 1, the recording/reproducing system 10 includes a recording/reproducing apparatus 100 as an example of the information processing apparatus, a remote controller 200 and a mobile terminal 300.

The recording/reproducing apparatus 100 is a television set or the like for reproducing images and the like. The recording/reproducing apparatus 100 has a function of recording images and is capable of reproducing the recorded images. The recording/reproducing apparatus 100 reproduces images in response to an operation signal received from the remote controller 200. The recording/reproducing apparatus 100 displays a menu screen, for example, and receives an operation signal from the remote controller 200 toward the menu screen. The recording/reproducing apparatus 100 according to the present embodiment can reproduce images in response to the operation signal not only from the remote controller 200 but from the mobile terminal 300.

The remote controller 200 is the device that the user remotely operates the recording/reproducing apparatus 100. The remote controller 200 includes an operation part such as buttons, keys and the like accepting remote user operation. The remote controller 200 performs communication with the recording/reproducing apparatus 100 by infrared data communication or the like and transmits an operation signal corresponding to the user operation to the recording/reproducing Apparatus 100.

The mobile terminal 300 is the mobile terminal such as a mobile phone, PDA, a tablet or the like used by the user. The mobile terminal 300 can communicate with the recording/reproducing apparatus 100 via network and has a function of remotely the recording/reproducing apparatus 100. The mobile terminal 300 includes an operation part such as buttons, keys and the like accepting the remote user operation.

As described above, in the recording/reproducing system 10, the user can cause the recording/reproducing apparatus 100 to reproduce images by remotely controlling the recording/reproducing 100 from the remote controller 200 or the mobile terminal 300.

Note that, the recording/reproducing apparatus 100 can communicate with an external server and an external device in which content data is stored though not illustrated in FIG. 1. The recording/reproducing apparatus 100 can receive and reproduce the content data stored in the external server and the external device.

### (1-2. Recording/reproducing Apparatus Hardware Configuration)

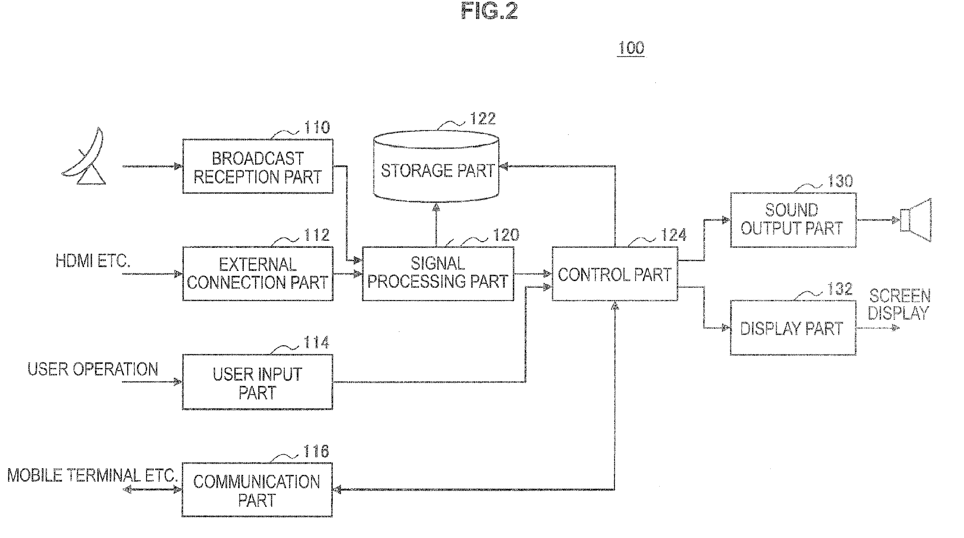

The detailed configuration of the recording/reproducing apparatus 100 will be described with reference to FIG. 2. FIG. 2 is a diagram illustrating a hardware configuration of the recording/reproducing Apparatus 100.

As illustrated in FIG. 2, the recording/reproducing Apparatus 100 includes a broadcast reception part 110, an external connection part 112, a user input part 114, a communication part 116, a signal processing part 120, a storage part 122, a control part 124, a sound output part 130 and a display part 132.

The broadcast reception part 110 receives television broadcast signals via a tuner. The broadcast reception part 110 transmits the received television broadcast signals to the signal processing part 120.

The external connection part 112 is HDMI (High-Definition Multimedia interface) or the interface for USB (Universal Serial Bus) connection. The external connection pars 112 monitors external connection and receives content data and content metadata stored in the external device at a connection destination such as an USB device and the like. The external connection part 112 transmits the received data to the signal processing part 120.

An operation signal corresponding to the user operation is input to the user input part 114. For example, when the user operates the operation buttons provided on the recording/reproducing apparatus 100, the operation signal is input to the user input part 114. Alternatively, when the user remotely operates the recording/reproducing apparatus 100 by using the remote controller 200, the operation signal is input to the user input part 114. As described above, one user operation among a plurality of user operations performed in respective modes different from one another is input at the user input part 114. The user input part 114 transmits the input operation signal to the control part 124.

The communication part 116 communicates with the mobile terminal 300 connected via network. The communication part 116 has a function as a transmission part transmitting a content list to the mobile terminal 300 and a reception part receiving the operation signal from the mobile terminal 300. Further, the communication part 116 communicates via network with the external server (external device) in which content data is stored. The communication part 116 includes cornrnun!cation devices such as a wired or wireless LAN, a Bluetooth communication card, a communication router, a communication modem and the like.

The signal processing part 120 processes signals and data transmitted from the broadcast reception part 110 or the external connection part 112. For example, the signal processing part 120 extracts image information and sound information from the content data and analyzes program information of digital broadcasting. The signal processing part 120 transmits the image information, the sound information and the program information to the storage part 122.

The storage part 122 has a function of storing various types of information used by the control part 124. The storage part 122 stores the content data. For example, the storage part 122 stores the content data recorded by the control part 124. The storage part 122 stores the image information, the sound information and the program information transmitted from the signal processing part 120. The storage part 122 includes a storage device such as a magnetic storage device, a semiconductor storage device, an optical storage device or the like.

The control part 124 has a function of controlling the whole operation of the recording/reproducing apparatus 100. For example, the control part 124 performs output control of the image information and the sound information, record processing, communication processing with an external device, display control of a user interface and the like, Further, the control part 124 searches for the content data stored in the storage part 122. The control part 124 includes CPU, ROM and RAM.

The sound output part 130 outputs a sound upon receiving the sound information stored in the storage part 122. The sound output part 130 includes a speaker, for example.

The display part 132 displays images upon receiving the image information stored in the storage part 122. The display part 132 displays a user interface such as a menu screen and the like. The display part 132 includes a display device such as a liquid crystal display, a plasma display, an organic EL display or the like.

### (1-3. Content Data Reproduction Method)

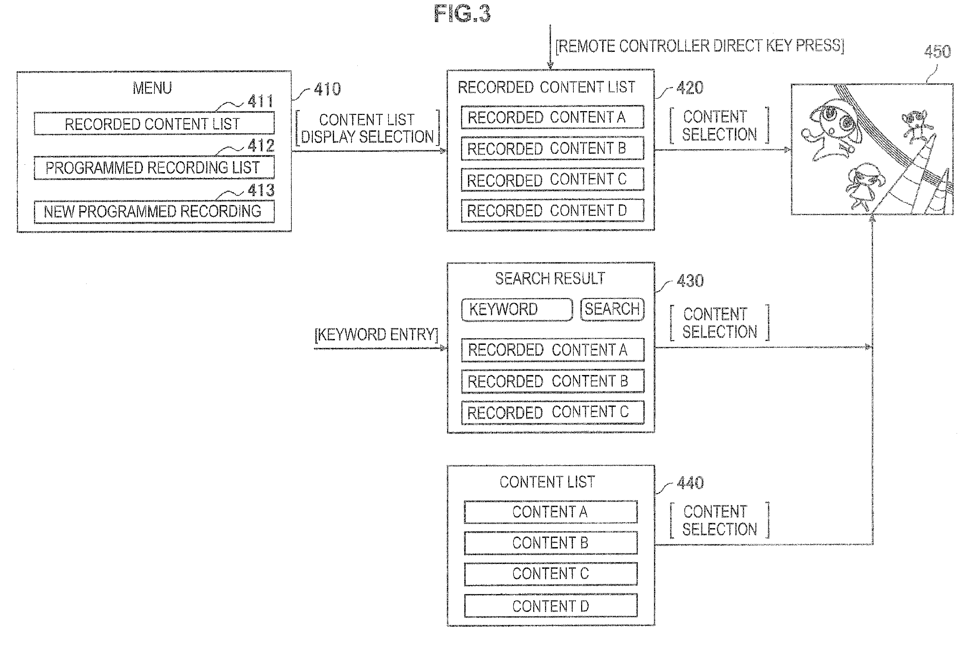

A reproduction method of the content data according to the first embodiment will be described with reference to FIG. 3. FIG. 3 is a diagram explanatory of the reproduction method of the content data according to the first embodiment.

The recording/reproducing apparatus 100 of the present embodiment reproduces content by a reproduction method selected from four reproduction methods corresponding to the user operation. The four reproduction methods are a reproduction method from a content list of the recorded applications, a reproduction method from a list displayed by a direct key of the remote controller 200, a method of searching for content by a keyword and reproducing the content and a reproduction method from the mobile terminal 300. The four reproduction methods will be described in detail below.

### (Reproduction Method from Content List of Recorded Appi!cat!ons)

The reproduction method from the content list of the recorded applications starts from display of the menu screen 410 of the recorded applications. The menu screen 410 of the recorded applications is the screen displaying items of functions related to recording of the content.

The items of the menu screen 410 are a recorded content list 411, a programmed recording list 412 and a new programmed recording 413. When the user selects the recorded content list 411, the recording/reproducing apparatus 100 switches a display to the screen displaying the recorded content list When the user selects the programmed recording list 412, the recording/reproducing apparatus 100 switches a display to the screen displaying the programmed recording list. When the user selects the new programmed recording 413, the recording/reproducing apparatus 100 switches a display to the screen for performing the new programmed recording.

Here, the user is assumed to select the recorded content list 411. Then, the recording/reproducing apparatus 100 switches a display from the menu screen 410 to the recorded content list screen 420. On the recorded content list screen 420, the list of the recorded content A-D is displayed. The user can select processing such as reproduction, edition, deletion and the like for the content on the list. For example, when the user selects any given content from the list, the recording/reproducing apparatus 100 switches a display to a reproduction screen 450 and reproduces the selected content.

The above-described reproduction method from the content list of the recorded applications is effective in the case where there is an application for aggregating functions (e.g., creation of new programmed recording, edition of a programmed recording list and the like) strongly linked to reproduction of the recorded content. The content requested by the user can be immediately reproduced by continuous use of the functions strongly linked to the reproduction.

### (Reproduction Method from List Displayed by Remote Controller Direct Key)

The reproduction method from the list displayed by the direct key of the remote controller 200 starts when the user presses the direct key of the remote controller 200. Here, the direct key is the key for forcibly switching the display to the recorded content list screen 420 though the recording/reproducing apparatus 100 displays any kind of screen.

When the user presses the direct key, the recording/reproducing apparatus 100 forcibly displays the recorded content list screen 420 though the recording/reproducing apparatus 100 displays a screen irrelevant to reproduction. Then, when the user selects any given content from the list on the content list screen 420, the recording/reproducing apparatus 100 switches a display to the reproduction screen 450 and reproduces the selected content.

In the above-described reproduction method from the list displayed by the direct key of the remote controller 200, an operation for displaying the content list is only one step though the recording/reproducing apparatus 100 displays any kind of Accordingly, the number of user operations for reproducing the content can be reduced.

### (Method of Searching for Content by Keyword and Reproducing Content)

The method of searching for content by a keyword and reproducing the content starts when the user enters a keyword on a search screen. When the user enters the keyword, the recording/reproducing apparatus 100 content data relevant to the entered keyword from all of the content data stored in the storage part 122 and displays the extracted content on a search result screen 430.

The search result screen 430 is the screen displaying the retrieved content relevant to the keyword entered by the user. On the search result screen 430, the extracted recorded content A-C are displayed in a list. When the user selects any given content from the list on the search result screen 430, the recording/reproducing apparatus 100 switches a display to the reproduction screen 450 and reproduces the selected content.

The above-described method of searching for content by a keyword and reproducing the content is effective in the case where meta-information related to the content data exists and the user knows the keyword that is a clue for searching for the content. In the case where an amount of the content data is enormous and the content have a hierarchy structure, the desired content can be reproduced by keyword entry in the reduced number of user operations.

For example, in the case where content desired to view is specified, the content to view can be searched for by a keyword. In the case where the user does not specify content desired to view but desires to view some content, the user can select content from the content list. According to the above-described method, the user can effectively select content to view in accordance with a user's purpose.

### (Reproduction Method from Mobile Terminal)

The reproduction method from the mobile terminal 300 starts when the mobile terminal 300 acquires the list of the content data stored in the recording/reproducing apparatus 100. The mobile terminal 300 displays a content list screen 440 in accordance with the acquired list on a display part of the mobile terminal 300.

On the content list screen 440, content A-D that the recording/reproducing apparatus 100 can reproduce are displayed. When the user selects any given content from the content list on the content list screen 440, the mobile terminal 300 transmits a selection signal to the recording/reproducing apparatus 100. The recording/reproducing apparatus 100 switches a display to the reproduction screen 450 upon receiving the selection signal and reproduces the selected content.

Since it is not necessary for the above-described reproduction method from the mobile terminal 300 to display the selection screen on the recording/reproducing apparatus 100, the user can select the content independent of the display screen of the recording/reproducing apparatus 100. Further, since the content list can be still displayed on the mobile terminal 300 after reproduction of the content, the user can search for desired content by viewing content in the list on the mobile terminal 300.

Still further, a reproducing device (recording/reproducing apparatus 100) and a device (mobile terminal 300) for selecting content to be reproduced can be separated by interlinking the recording/reproducing apparatus 100 with the mobile terminal 300. Accordingly, the user can select content to be reproduced next during reproduction of content.

As described above, four reproduction methods are different in content access path until content is reproduced. The recording/reproducing apparatus 100 can select the most appropriate access path in accordance with a user's purpose and circumstances by selecting one reproduction method from four reproduction methods corresponding to the user operation, thereby effectively reproducing the content.

### (1-4. Recording/reproducing Apparatus Functional Configuration)

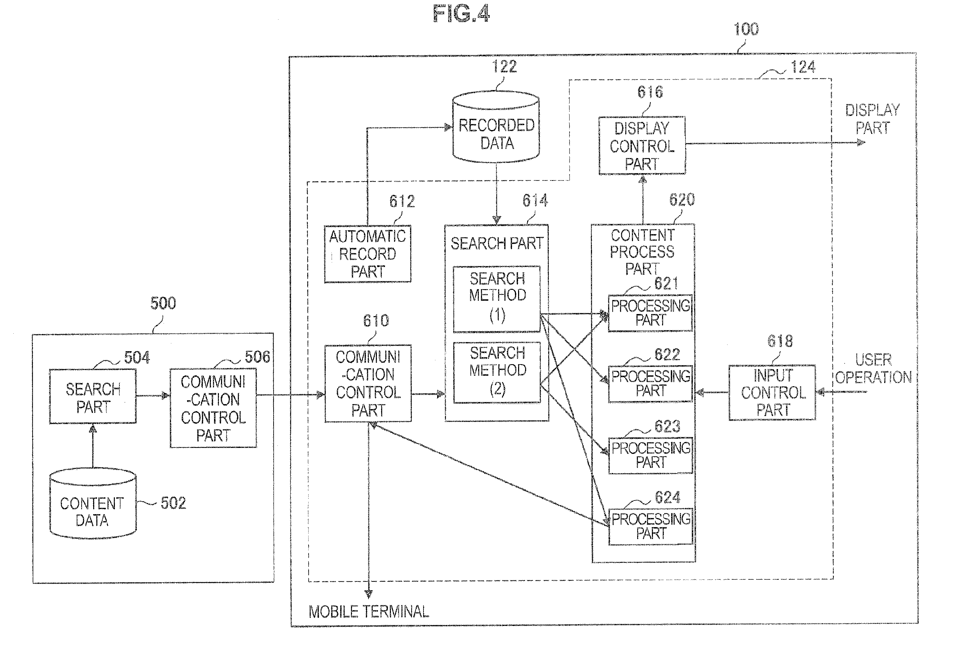

A functional configuration of the recording/reproducing apparatus 100 will be described with reference to FIG. 4. FIG. 4 is a functional block diagram illustrating a configuration of the recording/reproducing apparatus 100.

As illustrated in FIG. 4, the recording/reproducing apparatus 100 includes a communication control part 610, an automatic record part 612, a search part 614, a display control part 616, an input control part 618 and a content processing part 620.

The communication control part 610 controls the communication part 116 (FIG. 2). The communication control part 610 causes the communication part 116 to receive content data from an external device 500. The communication control part 610 causes the communication part 116 to transmit the content list to the mobile terminal 300 and to receive a control signal (control signal for reproducing content) sent from the mobile terminal 300.

The automatic record part 612 has a function of automatically recording content. The content data automatically recorded by the automatic record part 612 is stored in the storage part 122.

The search part 614 searches for the content data stored in the storage part 122. The search part 614 can search for the content data based on a search query from the content processing part 620. The search part 614 searches for the content data using various search methods. For example, the search part 614 performs keyword search (search method (1)) or genre search (search method (2)). Note that, the search part 614 can also search for content data stored in the external device 500.

The display control part 616 controls the display part 132 (FIG. 2) to provide a user interface display or reproduce the recorded content. For example, the display control part 616 causes the display part 132 to display the content list in response to an instruction from the content processing part 620.

The input control part 618 transmits a user operation input to the user input part 114 (FIG. 2) to the content processing part 620.

The content processing part 620 is an aggregation of applications performing processing on the content data. The content processing part 620 includes a plurality of processing parts 621-624 and each of the processing parts 621-624 is an independent application. The processing parts 621-624 access the content data stored in the storage part 122 through respective access paths different from one another to process the content data. For example-, the processing part 621 performs processing corresponding to the above-described reproduction method from the content list of the recorded applications and the processing pars 622 performs processing corresponding to the reproduction method from the list displayed by the direct key of the remote controller. The processing part 623 performs processing corresponding to the method of searching for content by a keyword and reproducing the content and the processing part 624 performs processing corresponding to the reproduction method from the mobile terminal 300.

Each of the processing parts 621-624 sends the search query to the search part 614 upon receiving the user operation from the input control part 618. Each of the processing parts 621-624 performs processing such as reproduction of the content and the like upon receiving a result of search performed by the search part 614.

One processing part among the plurality of processing part 621-624 corresponding to one user operation input to the user input part 114 accesses and processes the content data. That is, since one processing part corresponding to one user operation accepted by the user input part 114 accesses the content data, the content data can be selected through one access path among access paths different from one another with respect to each piece of content data. Accordingly, the user can effectively select a desired piece of the content data by selecting the processing part of the less number of processings for selection depending on the content data.

The processing parts 621-624 perform processing for causing the display part 132 to display the list of the content data accessible by the processing parts 621-624. That is, when the processing parts 621-624 transmit a process instruction to the display control part 616, the display control part 616 causes the display part 132 to display the content list. Accordingly, when the user selects the content from the displayed content list, the processing parts 621-624 reproduce the selected content, for example.

One processing part (here, processing part 624 is referred to as an example) among the processing parts 621-624 is accessible to external content data via the communication part 116. The processing part 624 performs processing for causing the display part 132 to display a list of the content data stored in the storage part 122 and the external content data stored in the external device. Accordingly, the content stored in the storage part 122 and the external content stored in the external device are displayed on the same list, so that the user can easily select desired content though not knowing whether the desired content is stored in the storage part 122 or in the external device.

The external content data and the content data displayed together on the display part 132 may be the data different from each other in genre. The data different from each other in genre are the content such as a music file that the user frequency uses, for example, and the recorded content, and the both are recently used. By displaying recently used data in different genres as above, the user can select the desired content from content of various genres.

The processing parts 621-624 perform processing for causing the display pars 132 to display content data stored in the storage part 122 or in the external device accessible by the content processing part 620 when causing the display part 132 to display the search result obtained by the search part 614. Accordingly, the user can get an opportunity to view not knowing content (e.g., automatically recorded content) by causing the display part 132 to display the content not expected by the user as a search target and stored in the storage part on the list when displaying the search result.

The processing parts 621-624 perform processing for causing the display part 132 to display the content data stored in the storage part 122 corresponding to the one keyword together when causing the display part 132 to display the external content data retrieved by the search part 614 based on the one keyword. Accordingly, the user can view not knowing content (e.g., automatically recorded content) related to the one keyword.

As illustrated in FIG. 4, the recording/reproducing apparatus 100 is communicable with the external device 500 storing the content data and the like. The external device 500 includes a storage part 502, a search part 504 and a communication control part 506.

The storage part 502 stores the content data. For example, the storage part 502 stores image data the content data and metadata of the content data.

The search part 504 searches for the content data stored in the storage part 502. For example, the search part 504 searches for the content data in response to a request from the recording/reproducing apparatus 100.

The communication control part 506 controls a communication part (not shown) to perform transmission of data with the recording/reproducing apparatus 100. For example, the communication control part 506 transmits information (metadata and image data) related to the content data retrieved by the search part 502 to the recording/reproducing apparatus 100.

### (1-5. Recording/reproduction Apparatus Operation in Content Reproduction Processing)

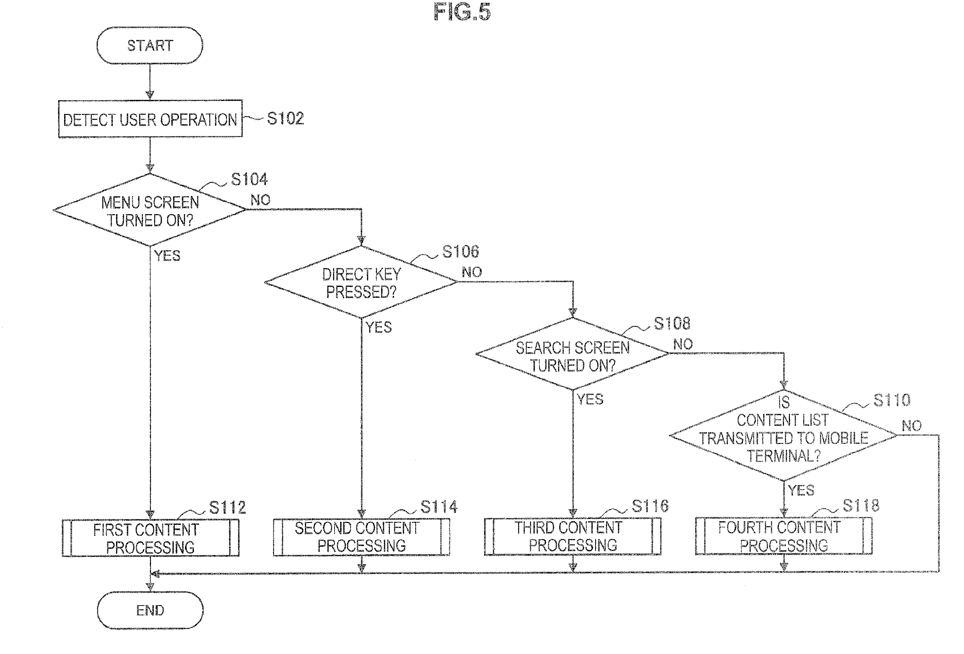

The operation of the recording/reproducing apparatus 100 in content reproduction processing will be described with reference to FIG. 5. FIG. 5 is a flowchart illustrating the operation of the recording/reproducing apparatus 100 according to a first embodiment.

The processing is achieved when CPU of the control part 124 of the recording/reproducing apparatus 100 executes programs stored in ROM. Note that, the program to be executed may be stored in a storage medium such as CD (Compact Disk), DVD (Digital Versatile Disk), a memory card and the like or may be downloaded from a server and the like over the Internet.

First, the control part 124 detects the user operation (step S102). For example, the control part 124 detects an operation for turning on the screen, an operation for pressing the direct key, an operation for turning on the search screen or an operation for communicating with the mobile terminal 300 as the user operation.

Next, the control part 124 performs content reproduction processing corresponding to the detected user operation (steps S104-S118). The content reproduction processing is the processing corresponding to each of the above-described four reproduction methods. Accordingly, the control part 124 performs any one reproduction processing process of the four reproduction processing processes corresponding to the user operation.

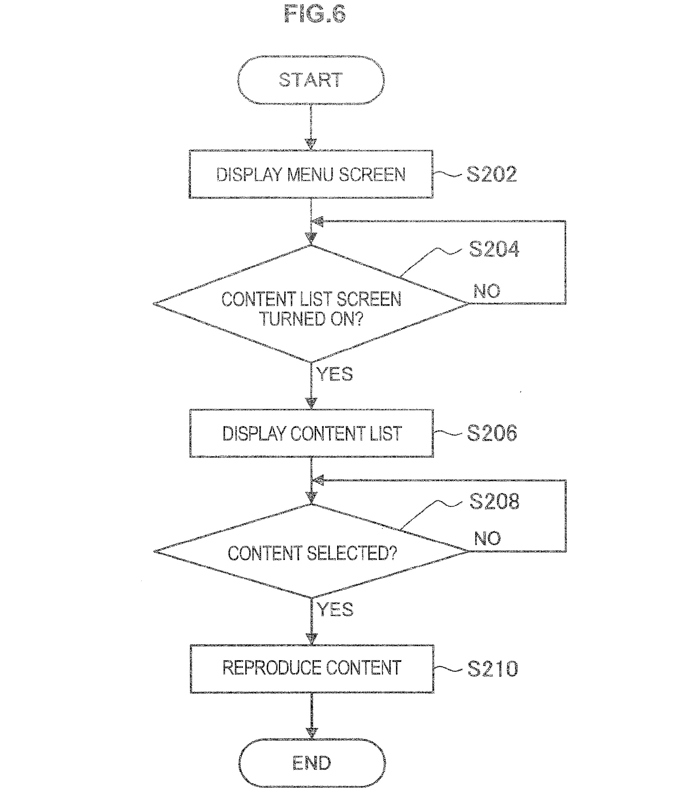

The control part 124 performs the first content reproduction processing illustrated in FIG. 6 (step S112) in the case where the user operation is the operation for turning on the menu screen (step S104: Yes).

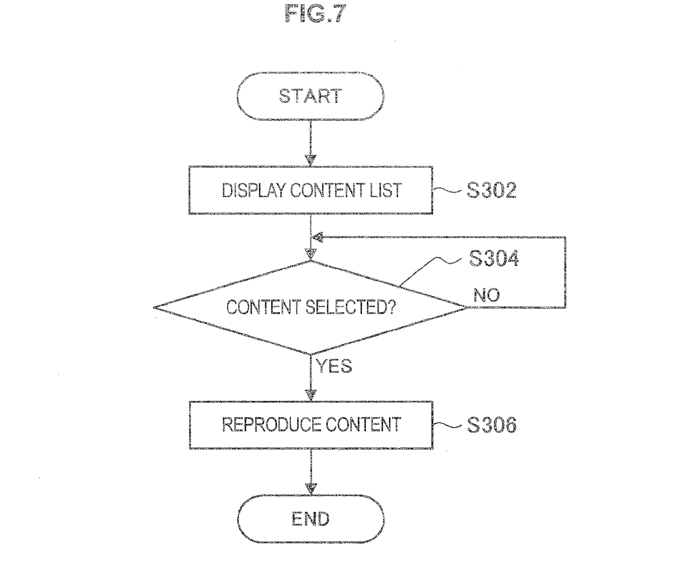

The control part 124 performs the second content reproduction processing illustrated in FIG. 7 (step S 114) in the case where the user operation is the operation for the direct key (step S106: Yes).

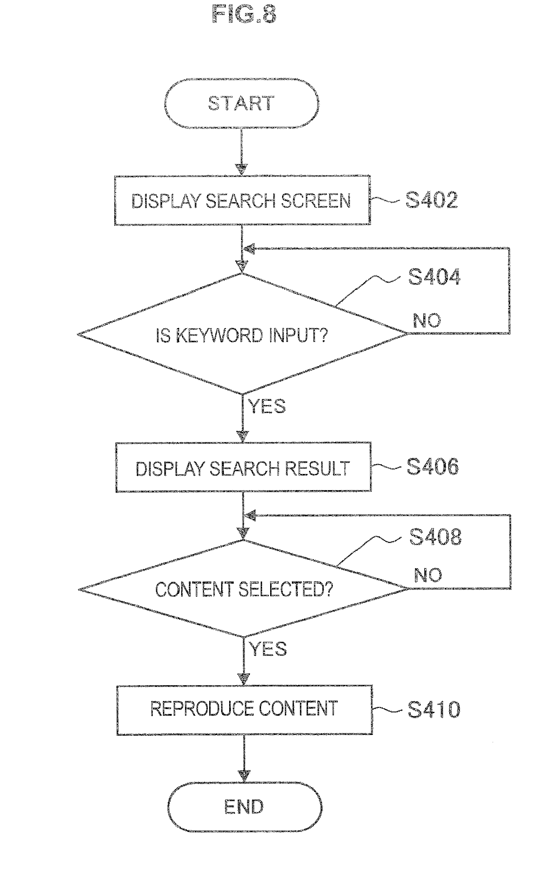

The control part 124 performs the third content reproduction processing illustrated in FIG. 8 (step S 116) in the case where the user operation is the operation for turning on the search screen (step S108: Yes).

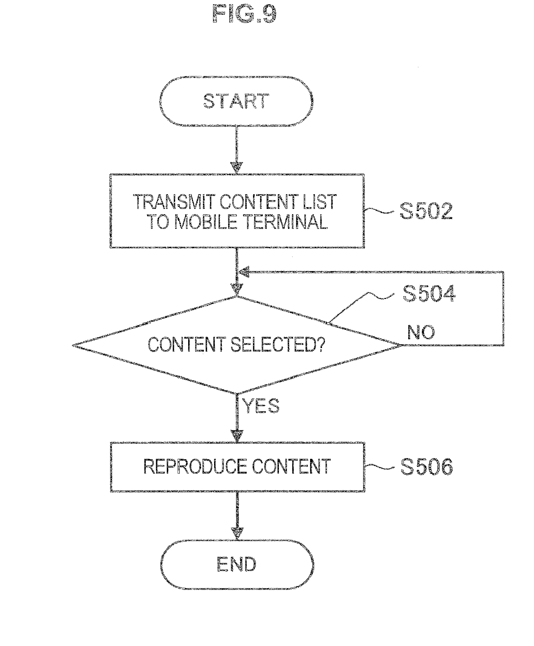

The control part 124 performs the fourth content reproduction processing illustrated in FIG. 9 (step S 118) in the case where the user operation is the operation for transmitting the content list to the mobile terminal 300 (step S110: Yes).

FIG. 6 is a flowchart illustrating reproduction processing from the content list of the recorded applications, which is the first content reproduction processing. In the flowchart of FIG. 6, the control part 124 displays the menu screen 410 (FIG. 3) in response to the user operation for turning on the menu screen (step S202).

Next, in the case where the control part 124 detects that the user has selected the recorded content list from the menu screen 410 (step S204: Yes), the control part 124 displays the recorded content list screen 420 (FIG. 3) (step S206).

Next, in the case where the control part 124 detects that the user selects the content from the content list (step S208: Yes), the control part 124 reproduces the selected content on the reproduction screen 450 (FIG. 3) (step S210). Subsequently, when the reproduction terminates, the processing returns to the flowchart illustrated in FIG. 5 and the operation of the recording/reproducing apparatus 100 terminates.

FIG. 7 is a flowchart illustrating reproduction processing from a list displayed by the direct key of the remote controller, which is the second content reproduction processing. In the flowchart of FIG. 7, the control part 124 displays the recorded content list screen 420 (FIG. 3) first in response to the user operation to press the direct key (step S302).

Next, in the case where the control part 124 detects that the user has selected the content from the content list (step S304: Yes), the control part 124 reproduces the selected content on the reproduction screen 450 (FIG. 3) (step S306). Subsequently, when the reproduction terminates, the processing returns to the flowchart illustrated in FIG. 5 and the operation of the recording/reproducing apparatus 100 terminates.

FIG. 8 is a flowchart illustrating processing of searching for content by a keyword and reproducing the content, which is the third content reproduction processing. In the flowchart of FIG. 8, the control part 124 displays the search screen first in response to the user operation for turning on the search screen (step S402)

Next, in the case where the control part 124 detects that the user has entered a keyword on the search screen (step S404: Yes), the control part 124 displays the search result screen 430 corresponding to the entered keyword (step S406). For example, the control part 124 extracts the content corresponding to the keyword from all of the content and displays the extracted content on the search result screen 430.

Next, in the case where the control part 124 detects that the user has selected the content on the search result screen (step S408: Yes), the control part 124 reproduces the selected content on the reproduction screen 450 (FIG. 3) (step S410). Subsequently, when the reproduction terminates, the processing returns to the flowchart illustrated in FIG. 5 and the operation of the recording/reproducing apparatus 100 terminates.

FIG. 9 is a flowchart illustrating reproduction processing from the mobile terminal 300, which is the fourth content reproduction processing. In the flowchart, of FIG. 9, the control part 124 transmits the content list to the mobile terminal 300 (step S502) in response to the user operation for transmitting the content list to the mobile terminal 300.

The mobile terminal 300 displays the content list screen 440 (FIG. 3) upon receiving the content list. When the user selects the content on the content list screen 440, the mobile terminal 300 transmits the selected information to the recording/reproducing apparatus 100.

Next, in the case where the control part 124 detects that the user has selected the content from the content list based on the information received form the mobile terminal 300 (step S504: Yes), the control part 124 reproduces the selected content on the reproduction screen 450 (FIG. 3) (step S506). Subsequently, when the reproduction terminates, the processing returns to the flowchart illustrated in FIG. 5 and the operation of the recording/reproducing apparatus 100 terminates.

According to a first embodiment, since one processing part corresponding to one user operation accepted by the user input part 114 accesses the content data, the content data can be retrieved through one access path among access paths different from one another with respect to each piece of content data. That is, the most appropriate access path in accordance with a user's purpose and circumstances can be selected and processing on the content can be effectively performed. Accordingly, the user can effectively select a desired piece of the content data by selecting a processing part of the less number of processing steps depending on the content data.

Further, according to the first embodiment, since both the content stored in the storage part 122 and the content stored in the external device (external server and the like) are displayed in the content list, the user can easily select the content though not knowing whether the desired content is stored in the storage part 122 or in the external device.

### < 2. Second Embodiment >

In the second embodiment, the content stored in a plurality of external devices are aggregated to be displayed in one list and reproduced.

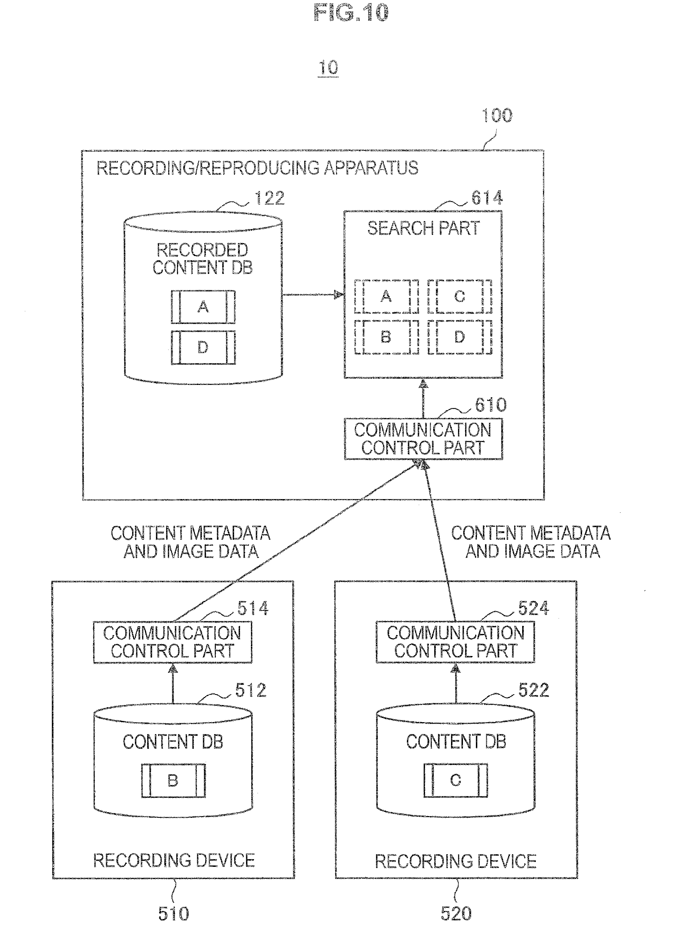

A schematic configuration of the recording/reproducing system 10 according to the second embodiment will be with reference to FIG. 10. FIG. 10 is a diagram illustrating the schematic configuration of the recording/reproducing system 10 according to the second embodiment.

As illustrated in FIG. 10, the recording/reproducing system 10 includes a recording/reproducing apparatus 100, and a recording device 510 and a recording device 520 which are external devices communicable with the recording/reproducing apparatus 100. Note that, configuration other than the configuration of the recording/reproducing apparatus 100 according to the second embodiment described below are similar to the configuration of the recording/reproducing apparatus 100 according to the first embodiment and the detailed description thereof will be omitted.

Here, it is assumed that the storage part 122 of the recording/reproducing apparatus 100 stores content A and content D, the storage part 512 of the recording device 510 stores content B, and the storage part 522 of the recording device 520 stores content C. And the recording/reproducing apparatus 100 can not only reproduce the content A, D but also receive metadata and image data of the content B, C from the recording devices 510, 520 and reproduce the content B, C.

For example, the recording/reproducing apparatus 100 aggregates the content B, C stored in, the recording devices 510, 520 and displays the content A-D in a list on the content list screen when the user performs an operation for displaying the content list including the content desired to reproduce. When the user selects any given content from the list, the recording/reproducing apparatus 100 switches a display to the reproduction screen and reproduces the selected content.

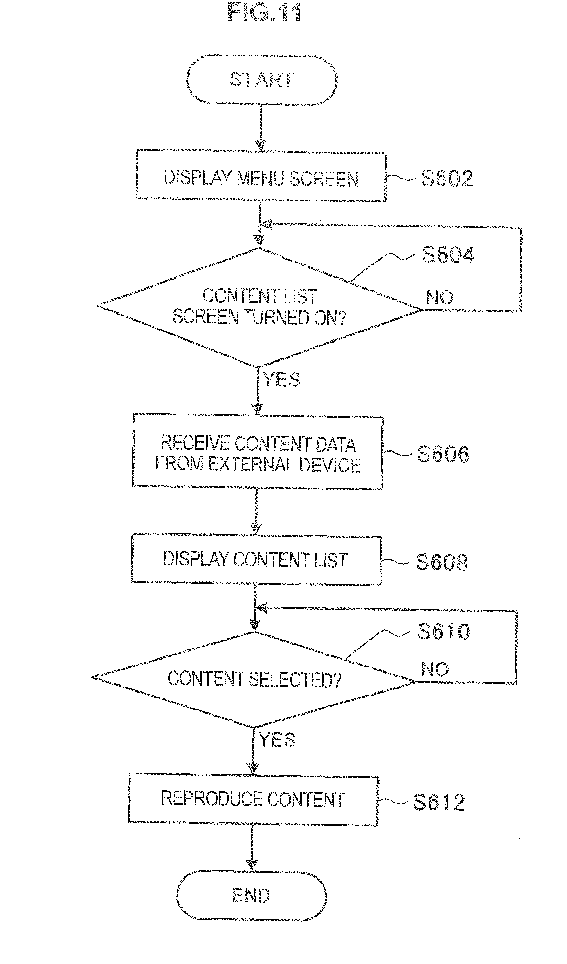

An operation of the recording/reproducing apparatus 100 according to the second embodiment in content reproduction processing will be described with reference to FIG, 11. FIG. 11 is a flowchart illustrating the operation of the recording/reproducing apparatus 100 according to the second embodiment. The recording/reproducing apparatus 100 performs processing according to the flowchart of FIG. 11 instead of the processing according to the flowchart of FIG. 6, for example.

In the flowchart of FIG. 11, the control part 124 displays the menu screen 410 first in response to the user operation for turning on the menu screen (step S602).

Next, in the case where the control part 124 detects that the user has selected the recorded content list from the menu screen 410 (step S604: Yes), the control part 124 receives metadata of the content (content B, C) from the recording devices 510, 520 (step S606). Subsequently, the control part 124 displays the content A-D on the recorded content list screen (step S608). That is, the control part 124 aggregates the content in the plurality of devices and displays the content in one list.

Next, in the case where the control part 124 detects that the user has selected the content from the content list (step S610: Yes), the control part 124 reproduces the selected content on the reproduction screen 450 (FIG. 3) (step S612). For example, in the case where the content B is selected, the control part 124 acquires image data of the content B from the recording device 510 and reproduces the content B. Note that, the image data of the content B may be preliminarily acquired in step S608.

According to the second embodiment, it becomes possible to aggregate and control the content stored in the plurality of recording devices 510, 520. Further, since the content in the plurality of devices are displayed in one list without any special user operation, the user can easily reproduce the content though not knowing in which device the content is stored.

Note that, though the processing according to the flowchart of FIG. 11 is performed instead of the processing according to the flowchart of FIG. 6 in the above description, the processing may be performed instead of the processing according to the flowcharts of FIG. 7-FIG. 9. Alternatively, the processing according to FIG. 11 may be performed together with the processing according to FIG. 6-FIG. 9.

### < 3. Third Embodiment >

In the third embodiment, in a case where a part of a serial program is not recorded, the recording/reproducing apparatus 100 displays the non-recorded part on the list in addition in the case where the non-recorded part exists on the Internet.

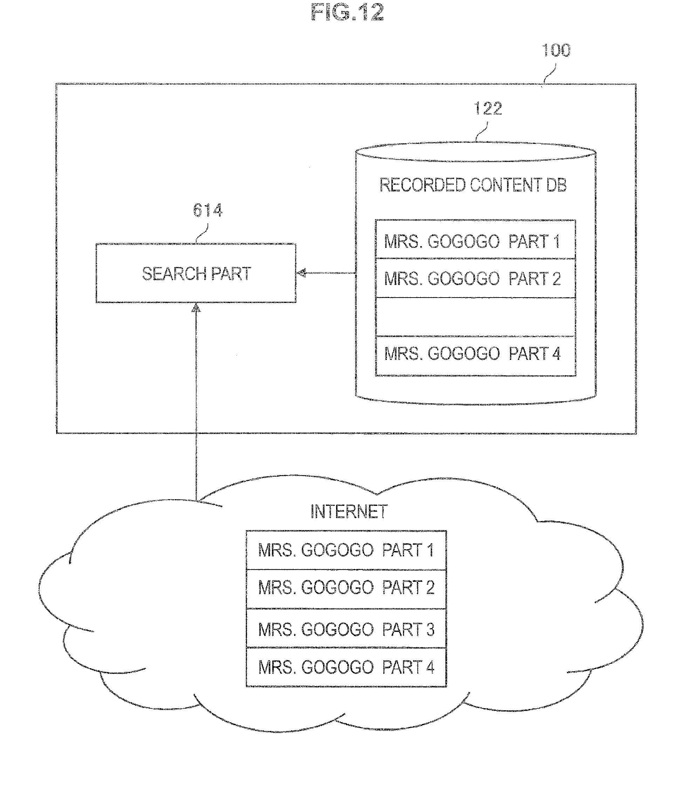

The third embodiment will be described with reference to FIG. 12. FIG. 12 is a diagram illustrating a configuration of the recording/reproducing apparatus 100 according to the third embodiment. A storage part 122 of the recording/reproducing apparatus 100 according to the third embodiment can store a group of content data (content of a serial program) in which a plurality of pieces of the content data have an association with one another.

In this embodiment, it is assumed that the recording/reproducing apparatus 100 illustrated in FIG. 12 records part 1, part 2 and part 4 from part 1-part 4 of serial content (Mrs. Gogogo), and has not recorded part 3. Accordingly, the storage part 122 stores part 1, part 2 and part 4. Meanwhile, recorded part 1-part 4 of Mrs. Gogogo are assumed to exist on a network.

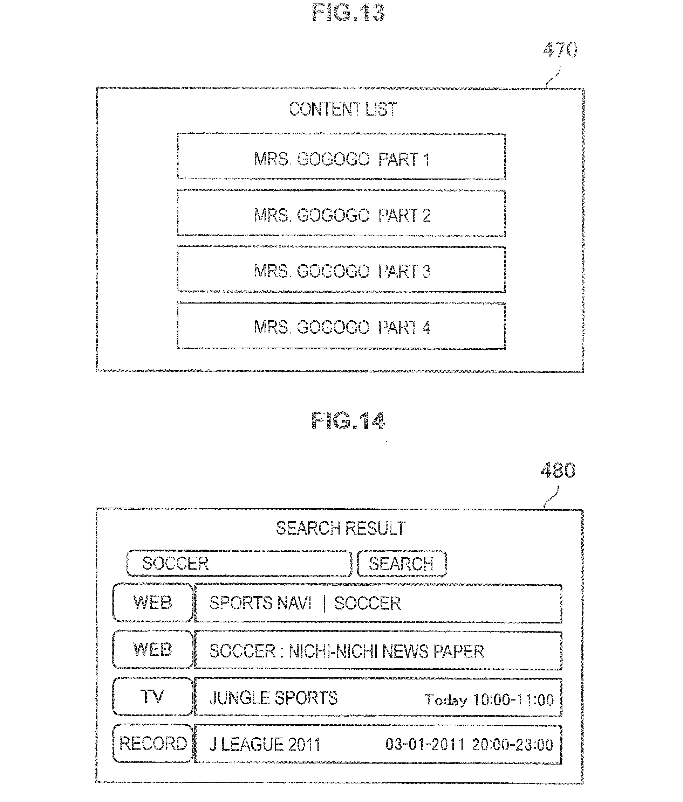

For example, when the user performs an operation for displaying a list of recorded Mrs. Gogogo, a search part 614 of the recording/reproducing apparatus 100 determines that part 3 among part 1-part 4 is not recorded and lacks. In the third embodiment, the search part 614 has a function of a determination part. In the case where the search part 614 determines that there is a lack in the content, the search part 614 searches for whether the lacked part 3 exists on the network (external server). When the part 3 exists on the network, the recording/reproducing apparatus 100 displays a content list screen 470 illustrated in FIG. 13. That is, the content processing part 620 of the recording/reproducing apparatus 100 performs processing for causing the display part 132 to display the lacked part 3 together when displaying the part 1, the part 2 and the part 4 of the content stored in the storage part 122.

FIG. 13 is a diagram illustrating the content list screen 470 according to the third embodiment. On the content list screen 470, a list of the part 1, the part 2 and the part 4 recorded in the recording/reproducing apparatus 100 and the part 3 existing on the network is displayed. When the user selects any given content from the content list, the recording/reproducing apparatus 100 switches a display to the reproduction screen and reproduces the selected content. For example, when the user selects the part 3, the recording/reproducing apparatus 100 downfoads data of the part 3 from the network and reproduces the part 3 on the reproduction screen.

According to the third embodiment, the user can reproduce a non-recorded part by the same operation for reproducing recorded content though the user does not know that a part of content of a serial program is not recorded if the non-recorded part exists on the network.

### < 4. Fourth Embodiment >

In the fourth embodiment, content unknown by the user but recorded by an automatic recording function (content recorded by the automatic record part 612 in FIG. 4) is displayed on a search result screen of keyword search.

The fourth embodiment will be described with reference to FIG. 14. FIG. 14 is a diagram illustrating the search result screen 480 of keyword search according to the fourth embodiment.

FIG. 14 illustrates the search result screen 480 displaying content corresponding to a keyword when the user searches for content by a specific keyword (e.g., soccer). The keyword search is performed without limiting to recorded content, content (here, content corresponding to a keyword soccer) recorded by the automatic recording function is also included on the search result screen 480. That is, the automatically recorded content are automatically included in the search result without user's intention to search for the recorded content.

According to the fourth embodiment, the user can know the unknown content recorded by the automatic recording function from the search result screen 480 thereby increasing the opportunity to reproduce the content recorded by the automatic recording function.

That is, in a device having a function of automatically recording a program without programmed recording, there is much content that the user does not know being recorded and the content has a low chance of being viewed. However, a chance for the automatically recorded content of being viewed by the user increases and automatic recording produces an enhanced effect by using another application such as an Internet browser for presenting the automatically recorded content related to the keyword the user is interested in.

### < 5. Conclusion >

In the above-described disclosure, the user input part 114 in which the user operation is input accepts one user operation among a plurality of user operations performed in respective modes different from one another. And one processing part corresponding to one user operation accepted by the user input part 114 among a plurality of processing parts 621-624 respectively having access paths different from one another to access and process content data stored in the storage part 122 accesses and processes the content data.

As described above, since one processing part corresponding to one user operation accepted by the user input part 114 accesses and processes the content data, the content data can be retrieved through one access path among access paths different from one another with respect to each piece of content data. That is, the most appropriate access path in accordance with a user's purpose and circumstances can be selected and processing on the content can be effectively performed. Accordingly, when the user selects the processing part with the less number of processes for selection depending on the content data, the desired content data is effectively selected. That is, the user can easily select content and the number of steps of processing content is reduced.

Further, since both the content stored in the storage part 122 and the content stored in the external device (external server and the like) are displayed in the content list, the user can easily select the content though not knowing whether the desired content is stored in the storage part 122 or in the external device.

Still further, in the case where a function relevant to recording such as new programmed recording, programmed recording list affirmation is used, the user can browse the recorded content list from a recording application. On the contrary, in the case where a function irrelevant to recording is used, the user can browse the recorded content list by pressing the direct key. As described above, the content list can be displayed by the most efficient method in accordance with a current operation or a currently displayed screen.

Still further, in the case where the user desires to view serial content in series, serial reproducing can be achieved effectively by reproducing the content from display in which the content is grouped with respect to each series. And in the case where the user wants to access the last viewed content, the user can immediately find the content by displaying a list of the recently viewed content. As described above, the step of searching for desired content and processing the content can be shortened by using a plurality of management methods for the content.

It should be understood by those skilled in the art that various modifications, combinations, sub-combinations and alterations may occur depending on design requirements and other factors insofar as they are within the scope of the appended claims or the equivalents thereof.

Still further, in the above description, recorded content is described as an example of the content that the content processing part processes, but not limited thereto. For example, the content processing part may process various content such as music, an animation and the like.

Still further, the steps in the flowchart of the above-described embodiments include not only processing performed in chronological order along a described order but also processing performed in parallel or individually though not performed in chronological order. Not to mention that the order of the steps performed in chronological order can be appropriately changed according to circumstances.

Additionally, the present technology may also be configured as below.
(1)An information processing apparatus comprising:
   a storage part storing content data;
   an input part to which one user operation is input among a plurality of different modes of user operations; and
   a plurality of processing parts accessing the content data stored in the storage part through respective access paths different from one another to process the content data,
   wherein one processing part corresponding to the one user operation input to the input part among the plurality of processing parts accesses and processes the content data.
(2) The information processing apparatus according to (1), wherein the plurality of processing parts cause a display part to display a list of the content data accessible by the processing parts.
(3) The information processing apparatus according to (2), further comprising a communication part communicable with an external device storing external content data,
   wherein at least one of the processing parts
   is accessible to the external content data via the communication part; and
   causes the display part to display a list of the content data stored in the storage part and the external content data stored in the external device accessible by the processing part.
(4) The information processing apparatus according to (2) or (3), further comprising a search part searching the external device storing the external content data,
   wherein at least one of the processing parts, when causing the display part to display a search result obtained by the search part, causes the display part to display the content data accessible by the processing part and stored in the storage part,
(5) The information processing apparatus according to (4), wherein
   the search part performs keyword search, and
   the at least one processing part, when causing the display part to display the external content data retrieved by one keyword by the search part, causes the display part to also display the content data stored in the storage part and corresponding to the one keyword.
(6) The information processing apparatus according to (5), wherein the content data stored in the storage part and corresponding to the one keyword is the content data recorded using an automatic recording function.
(7) The information processing apparatus according to (5) or (6), wherein the external content data and the content data displayed together by the display part are the data different from each other in genre.
(8) The information processing apparatus according to any one of (4) to (7), wherein the storage part stores a group of content data associated with one another,
   the information processing apparatus further comprises a determination part determining whether there is lacking content data in the group of the content data,
   the search part searches for the lacking content data in the external device in the case where the determination part determines that there is the lacking content data, and
   the at least one processing part, when causing the display part to display the list of the group of the content, data accessible by the processing part and stored in the storage part in the case where the search part has retrieved the lacking content data, causes the display part to also display the lacking content data.
(9) An information processing method comprising:
   accepting, with an input part to which a user operation is input, one user operation among a plurality of different modes of user operations; and
   accessing and processing, with one processing part corresponding to the one user operation that the input part has accepted among a plurality of processing parts accessing and processing content data stored in a storage part through respective access paths different from one another, the content data.
(10) A program causing a computer to execute:
   accepting, with an input part to which a user operation is input, one user operation among a plurality of different modes of user operations; and
   accessing and processing, with one processing part corresponding to the one user operation that the input part has accepted among a plurality of processing parts accessing and processing content data stored in a storage part through respective access paths different from one another, the content data.
   The present disclosure contains subject matter related to that disclosed in Japanese Priority Patent Application JP 2011-154613 filed in the Japan Patent Office on July 13, 2011, the entire content of which is hereby incorporated by reference.

## Claims

1. An information processing apparatus comprising:
a storage part storing content data;
an input part to which one user operation is input among a plurality of different modes of user operations; and
a plurality of processing parts accessing the content data stored in the storage part through respective access paths different from one another to process the content data,
wherein one processing part corresponding to the one user operation input to the input part among the plurality of processing parts accesses and processes the content data,

2. The information processing apparatus according to claim 1, wherein the plurality of processing parts cause a display part to display a list of the content data accessible by the processing parts.

3. The information processing apparatus according to claim 2, further comprising a communication part communicable with an external device storing external content data,
wherein at least one of the processing parts
is accessible to the external content data via the communication part; and
causes the display part to display a list of the content data stored in the storage part and the external content data stored in the external device accessible by the processing part.

4. The information processing apparatus according to claim 2, further comprising a search part searching the external device storing the external content data,
wherein at least one of the processing parts, when causing the display part to display a search result obtained by the search part, causes the display part to display the content data accessible by the processing part and stored in the storage part.

5. The information processing apparatus according to claim 4, wherein
the search part performs keyword search, and
the at least one processing part, when causing the display part to display the external content data retrieved by one keyword by the search part, causes the display part to also display the content data stored in the storage part and corresponding to the one keyword.

6. The information processing apparatus according to claim 5, wherein the content data stored in the storage part and corresponding to the one keyword is the content data recorded using an automatic recording function.

7. The information processing apparatus according to claim 5, wherein the external content data and the content data displayed together by the display part are the data different from each other in genre.

8. The information processing apparatus according to claim 4, wherein
the storage part stores a group of content data associated with one another,
the information processing apparatus further comprises a determination part determining whether there is lacking content data in the group of the content data,
the search part searches for the lacking content data in the external device in the case where the determination part determines that there is the lacking content data, and
the at least one processing part, when causing the display part to display the list of the group of the content data accessible by the processing part and stored in the storage part in the case where the search part has retrieved the lacking content data, causes the display part to also display the lacking content data.

9. An information processing method comprising:
accepting, with an input part to which a user operation is input, one user operation among a plurality of different modes of user operations; and
accessing and processing, with one processing part corresponding to the one user operation that the input part has accepted among a plurality of processing parts accessing and processing content data stored in a storage part through respective access paths different from one another, the content data.

10. A program causing a computer to execute:
accepting, with an input part to which a user operation is input, one user operation among a plurality of different modes of user operations; and
accessing and processing, with one processing part corresponding to the one user operation that the input part has accepted among a plurality of processing parts accessing and processing content data stored in a storage part through respective access paths different from one another, the content data.
